# FASCICULE DE BREVET EUROPEEN

(11) **EP 3 379 068 B1**
(45) Date de publication et mention de la délivrance du brevet: **15.05.2019**
(21) Numéro de dépôt: 18153125.2
(22) Date de dépôt: 24.01.2018
(51) Int. Cl.: F02K 1/72, F02K 1/76

(54) **NACELLE D'UN TURBORÉACTEUR COMPORTANT UN VOLET INVERSEUR**
MASCHINENGONDEL EINES STRAHLTRIEBWERKS, DIE EINE SCHUBUMKEHRKLAPPE UMFASST
TURBOJET NACELLE COMPRISING AN INVERTER FLAP

(30) Priorité: 22.03.2017 FR 1752348
(43) Date de publication de la demande: 26.09.2018
(73) Titulaire: Airbus Operations S.A.S., 31060 Toulouse (FR)
(72) Inventeur: JOLIVET, Nicolas, 31470 Fontenilles (FR)
(74) Mandataire: Gicquel, Olivier Yves Gérard

(56) Documents cités:
- EP-A2- 2 484 591
- US-A1- 2016 169 157

## Description

La présente invention concerne une nacelle d'un turboréacteur double flux qui comporte au moins un volet inverseur, un turboréacteur double flux comportant une telle nacelle et un moteur, ainsi qu'un aéronef comportant au moins un tel turboréacteur double flux.

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur. La nacelle comporte au moins un volet inverseur qui est mobile entre une position fermée dans laquelle il vient en continuité avec la surface extérieure de la nacelle et une position ouverte dans laquelle il ouvre une fenêtre dans la paroi de la nacelle pour expulser l'air du flux secondaire vers l'extérieur.

Le volet inverseur est monté mobile en rotation sur la structure de la nacelle de manière à passer d'une position fermée où le volet inverseur n'obture pas la veine du flux secondaire à une position ouverte où le volet inverseur obture la veine. Ainsi en position ouverte, le volet inverseur détourne une partie du flux secondaire vers l'extérieur par la fenêtre. On connaît différents mécanismes d'ouvertures pour faire passer le volet inverseur de la position ouverte à la position fermée. Ainsi, la demande de brevet US2016/169157 décrit un mécanisme d'ouverture comportant une came. Bien que ce mécanisme d'ouverture donne entière satisfaction, il est souhaitable de trouver des mécanismes différents.

Un objet de la présente invention est de proposer une nacelle comportant au moins un volet inverseur avec un mécanisme d'ouverture différent.

A cet effet, est proposée une nacelle pour un turboréacteur double flux telle que revendiquée dans la revendication 1.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef comportant une nacelle selon l'invention,
la Fig. 2 est une vue en perspective de la nacelle selon l'invention en position ouverte,
la Fig. 3 est une vue en perspective de la nacelle de la Fig. 2 en position intermédiaire et avec un système de verrouillage,
la Fig. 4 est une vue en perspective du système de verrouillage selon un premier mode de réalisation de l'invention,
la Fig. 5 est une vue en perspective du système de verrouillage selon différentes variantes.

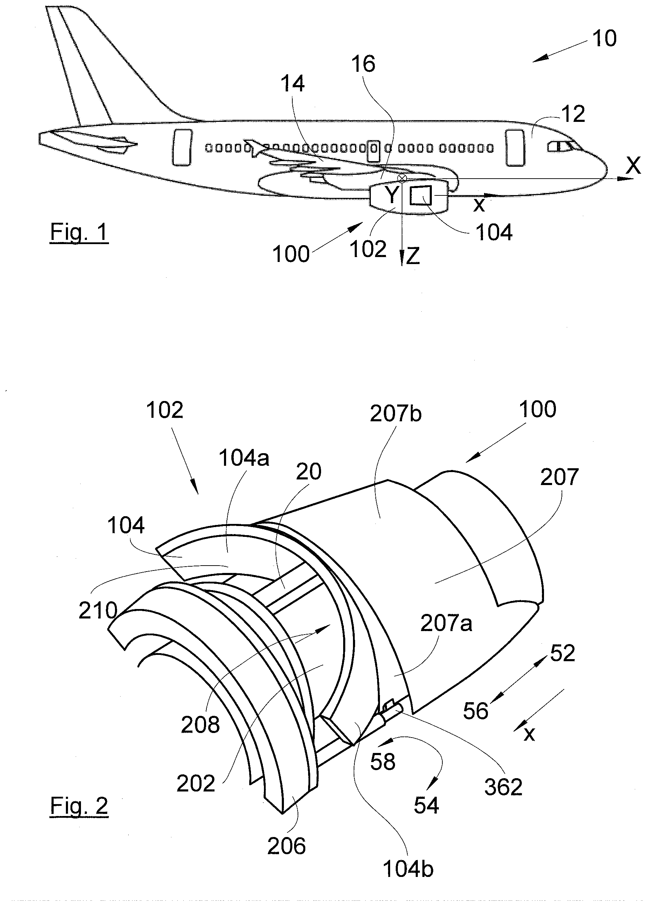

Dans la description qui suit, les termes relatifs à une position sont pris en référence à un aéronef en position d'avancement comme il est représenté sur la Fig. 1.

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

Le turboréacteur double flux 100 comporte la nacelle 102 et un moteur 20 qui est logé à l'intérieur de la nacelle 102, ainsi qu'une veine 202 entre la nacelle 102 et le moteur 20 dans laquelle circule le flux secondaire 208.

Dans la description qui suit, et par convention, on appelle x l'axe longitudinal de la nacelle 102 qui est parallèle à l'axe longitudinal X de l'aéronef 10 ou axe de roulis, orienté positivement dans le sens d'avancement de l'aéronef 10, on appelle Y l'axe transversal ou axe de tangage de l'aéronef qui est horizontal lorsque l'aéronef est au sol, et Z l'axe vertical ou hauteur verticale ou axe de lacet lorsque l'aéronef est au sol, ces trois directions X, Y et Z étant orthogonales entre elles et formant un repère orthonormé ayant pour origine le centre de gravité de l'aéronef.

La nacelle 102 comporte au moins un volet inverseur 104. En particulier, il peut y avoir deux volets inverseurs 104 disposés l'un en face de l'autre, ou quatre volets inverseurs 104 répartis régulièrement sur la périphérie de la nacelle 102.

Dans la description qui suit, l'invention est plus particulièrement décrite pour un volet inverseur 104, mais elle s'applique de la même manière pour chaque volet inverseur 104 lorsqu'il y en a plusieurs.

La nacelle 102 présente pour chaque volet inverseur 104, une fenêtre 210 ouverte entre la veine 202 et l'extérieur de la nacelle 102.

La nacelle 102 présente un capot fixe 206 qui est ici un cadre avant, qui délimite la fenêtre 210 en amont par rapport à l'axe longitudinal x et qui est monté fixe sur une structure de la nacelle 102.

La nacelle 102 présente un capot mobile 207 qui délimite la fenêtre 210 en aval par rapport à l'axe longitudinal x. Le capot mobile 207 est monté mobile en translation selon une direction de translation globalement parallèle à l'axe longitudinal x sur la structure de la nacelle 102. La translation est réalisée par tous moyens appropriés comme par exemple des glissières.

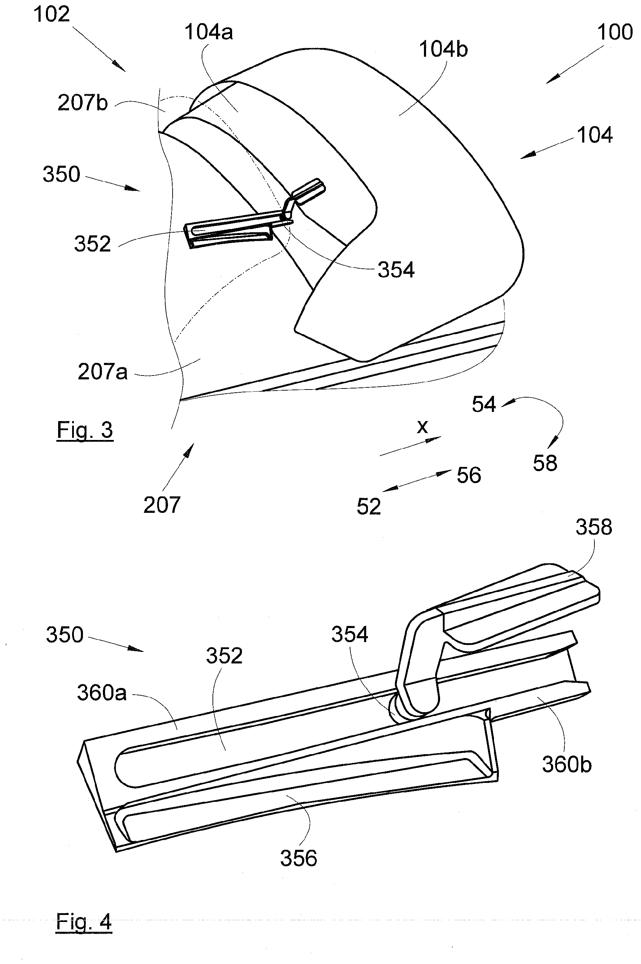

Comme le montre la Fig. 3, le capot mobile 207 présente une paroi intérieure 207a et une paroi extérieure 207b (représentée en traits mixtes) qui se déplacent de la même manière et simultanément. De la même manière, le volet inverseur 104 présente une paroi intérieure 104a et une paroi extérieure 104b qui se déplacent de la même manière et simultanément.

Le capot mobile 207 est mobile entre une position de fermeture dans laquelle il est rapproché du capot fixe 206 et une position d'ouverture dans laquelle il est éloigné du capot fixe 206 vers l'arrière de manière à élargir la fenêtre 210.

Le volet inverseur 104 est monté mobile en rotation autour d'un axe de rotation sur la structure de la nacelle 102 entre une position fermée dans laquelle il obture la fenêtre 210 et une position ouverte dans laquelle il n'obture pas la fenêtre 210. Dans le mode de réalisation de l'invention présenté sur les Figs. 2 et 3, l'axe de rotation est ici perpendiculaire à l'axe longitudinal x.

En position fermée, le volet inverseur 104 se positionne entre le capot fixe 206 et le capot mobile 207 qui est en position de fermeture. En position fermée du volet inverseur 104 et en position de fermeture du capot mobile 207, la paroi extérieure 207b du capot mobile 207 et la paroi extérieure 104b du volet inverseur 104 viennent dans le prolongement l'une de l'autre pour constituer une paroi extérieure de la nacelle 102. Dans le même temps, la paroi intérieure 207a du capot mobile 207 et la paroi intérieure 104a du volet inverseur 104 viennent dans le prolongement l'une de l'autre pour constituer une surface périphérique de la veine 202 autour du moteur 20.

En position ouverte, le capot mobile 207 est déplacé vers l'arrière pour faciliter la manoeuvre du volet inverseur 104 qui passe de la position fermée à la position ouverte.

Lorsque le volet inverseur 104 est en position fermée, la paroi extérieure 104b du volet inverseur 104 s'étend entre la surface extérieure du capot fixe 206 et la surface extérieure 207b du capot mobile 207 et sa surface intérieure s'étend entre la surface intérieure du capot fixe 206 et la surface intérieure du capot mobile 207 pour délimiter la veine 202.

Lorsque le volet inverseur 104 est en position ouverte, le volet inverseur 104 vient en travers de la veine 202 et dévie au moins une partie du flux secondaire 208 vers l'extérieur à travers la fenêtre 210.

Le passage de la position fermée à la position ouverte du volet inverseur 104 est coordonné mais différé par rapport au passage de la position de fermeture à la position d'ouverture du capot mobile 207 et inversement.

Cette coordination est assurée par un mécanisme d'entraînement qui réalise, à partir de la position fermée et de la position de fermeture, une première combinaison assurant :
- une translation vers l'arrière (flèche 52) du capot mobile 207 selon une direction de translation globalement parallèle à l'axe longitudinal x qui assure le déplacement du capot mobile 207 de la position de fermeture vers la position d'ouverture, puis à partir d'un certain moment,
- une rotation (flèche 54) du volet inverseur 104 autour de l'axe de rotation qui assure le déplacement du volet inverseur 104 de la position fermée à la position ouverte.

Comme cela est expliqué, la translation vers l'arrière du capot mobile 207 se poursuit durant la rotation du volet inverseur 104.

A l'inverse, le passage de la position ouverte à la position fermée du volet inverseur 104 est assuré par le même mécanisme qui est également prévu pour réaliser une deuxième combinaison assurant à partir de la position ouverte et de la position d'ouverture :
- une translation vers l'avant (flèche 56) du capot mobile 207 selon la direction de translation qui assure le déplacement du capot mobile 207 de la position d'ouverture à la position de fermeture, et
- une rotation (flèche 58) en sens inverse du volet inverseur 104 autour de l'axe de rotation qui assure le retour du volet inverseur 104 de la position ouverte à la position fermée.

Comme cela est expliqué, la translation vers l'avant du capot mobile 207 débute en même temps que la rotation du volet inverseur 104, puis la rotation s'arrête du volet inverseur 104 tandis que la translation du capot mobile 207 se poursuit.

Selon un mode de réalisation particulier, le mécanisme d'entraînement comprend au moins un premier actionneur 362 monté entre la structure de la nacelle 102, ici, le cadre avant 206, et le capot mobile 207, et plus particulièrement ici la paroi intérieure 207a. Ici l'actionneur 362 prend la forme d'un vérin, mais il peut prendre une autre forme comme par exemple un moteur ou tout autre moyen approprié pour déplacer un élément en translation.

En complément, le mécanisme d'entraînement peut également comporter au moins un deuxième actionneur, comme par exemple un autre vérin, monté entre le volet inverseur 104 et la structure de la nacelle 102, en particulier le cadre avant 206.

Chaque actionneur peut être électrique, hydraulique ou pneumatique ou autre. Le mécanisme d'entraînement comporte également une unité de contrôle, du type processeur, qui commande le déplacement dans un sens ou dans l'autre de chaque actionneur pour réaliser les mouvements différés décrits ci-dessus.

Sur la Fig. 3, la position intermédiaire représentée correspond :
- si le capot mobile 207 se déplace de la position de fermeture vers la position d'ouverture, à la position limite à partir de laquelle le volet inverseur 104 va entamer sa rotation de sa position fermée vers sa position ouverte, ou
- si le capot mobile 207 se déplace de la position d'ouverture vers la position de fermeture, à la position limite à partir de laquelle le volet inverseur 104 va terminer sa rotation de sa position ouverte vers sa position fermée.

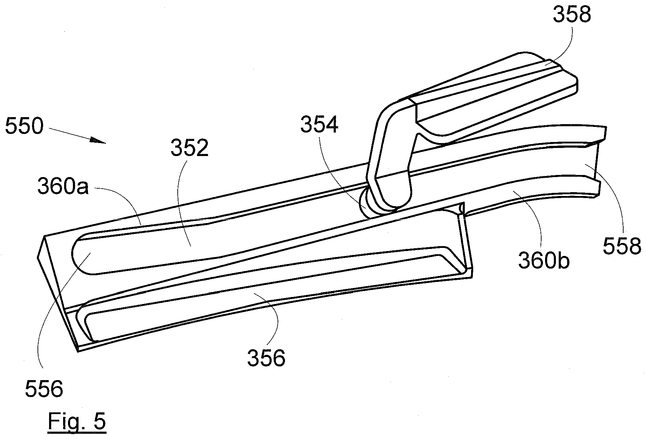

La Fig. 3 montre également un système de verrouillage 350 dont un mode de réalisation est représenté agrandi à la Fig. 4 et dont des variantes 550 sont représentées à la Fig. 5.

Le système de verrouillage 350, 550 comporte une rainure 352 et un élément guidé 354.

La rainure 352 est délimitée sur ses flancs par deux murs 360a-b globalement parallèles à la direction de translation, ici l'axe longitudinal x. Les murs 360a-b sont fixés au capot mobile 207, et plus particulièrement ici à sa paroi intérieure 207a. La rainure 352 s'étend donc globalement parallèlement à la direction de translation entre une première extrémité et une deuxième extrémité. Les murs 360a-b sont portés ici par un sabot 356 qui est fixé au capot mobile 207 par exemple par des vis ou des rivets.

L'élément guidé 354 est monté guidé dans la glissière 352 et est fixé au volet inverseur 104, et plus particulièrement ici à sa paroi intérieure 104a. L'élément guidé 354 est porté ici par une palette 358 qui est fixée au volet inverseur 104 par exemple par des vis ou des rivets.

Les formes de la rainure 352 et des murs 360a-b sont adaptées de manière à ce que l'élément guidé 354 reste immobile durant une partie de la translation du capot mobile 207.

L'élément guidé 354 est ici un rouleau mobile en rotation autour de son axe mais il pourrait prendre une autre forme telle qu'un patin. L'élément guidé 354 peut ainsi être un élément roulant ou glissant dans la glissière 352.

Le système de verrouillage 350, 550 permet de verrouiller le volet inverseur 104 en position fermée lorsque que sa rotation n'est pas souhaitée, en particulier durant une partie du déplacement en translation vers l'avant ou vers l'arrière du capot mobile 207.

L'élément guidé 354 se déplace dans la rainure 352 tant que le volet inverseur 104 ne tourne pas et l'élément guidé 354 sort de la rainure 352 lorsque le volet inverseur 104 doit pivoter.

La première extrémité de la rainure 352 est orientée vers l'avant, c'est-à-dire vers le volet inverseur 104, et est ouverte, c'est-à-dire que la rainure 352 n'est pas fermée pour laisser l'élément guidé 354 sortir de la rainure 352.

La deuxième extrémité est orientée à l'opposé et est ici fermée. La longueur de la rainure 352 du côté de la deuxième extrémité est suffisante pour que l'élément guidé 354 ne puisse pas en sortir lorsque le capot mobile 207 est en position de fermeture.

Ainsi, à partir de la position de fermeture/fermée, l'élément guidé 354 est dans la rainure 352 du côté de la deuxième extrémité. Au fur et à mesure que le capot mobile 207 est déplacé par le mécanisme d'entraînement vers l'arrière, l'élément guidé 354 se rapproche de la première extrémité, et tant que l'élément guidé 354 reste dans la rainure 352, le volet inverseur 104 reste immobile, puis lorsque l'élément guidé 354 sort de la rainure 352 par son extrémité ouverte, le volet inverseur 104 est libre de pouvoir pivoter pour passer de la position fermée à la position ouverte par action du mécanisme d'entraînement.

L'élément guidé 354 se déplace donc de la deuxième extrémité jusqu'à la première extrémité avec le déplacement du capot mobile 207 de sa position de fermeture vers sa position d'ouverture, et sort de la rainure 352 par la première extrémité lorsque le volet inverseur 104 entame sa rotation pour passer de la position fermée à la position ouverte.

La sortie de la rainure 352 de l'élément guidé 354 est antérieure ou concomitante à la mise en rotation du volet inverseur 104.

Ainsi, à partir de la position d'ouverture/ouverte, le capot mobile 207 est déplacé par le mécanisme d'entraînement vers l'avant et tant que l'élément guidé 354 est hors de la rainure 352, le volet inverseur 104 pivote pour passer de la position ouverte à la position fermée par action du mécanisme d'entraînement, puis lorsque l'élément guidé 354 pénètre dans la rainure 352 par l'extrémité ouverte, le volet inverseur 104 reste immobile, jusqu'à ce que le capot mobile 207 atteigne sa position de fermeture.

L'élément guidé 354 se déplace donc hors de la rainure 352 tant que le volet inverseur 104 pivote de sa position ouverte à sa position fermée et que le capot mobile 207 se déplace de sa position d'ouverture vers sa position de fermeture, et entre dans la rainure 352 par sa première extrémité à la fin de la rotation du volet inverseur 104 puis se déplace de la première extrémité jusqu'à la deuxième extrémité avec la poursuite du déplacement du capot mobile 207 jusqu'à sa position de fermeture.

L'entrée dans la rainure 352 de l'élément guidé 354 est postérieure ou concomitante à la fin de la rotation du volet inverseur 104.

L'ouverture de la première extrémité est prévue pour venir en regard de l'élément guidé 354 lorsque le volet inverseur 104 finit sa rotation et se trouve en position fermée.

Dans le mode de réalisation de l'invention présenté ici, il y a une seule rainure 352 et un seul élément guidé 354 par volet inverseur 104, mais il peut bien sûr, y en avoir plusieurs pour assurer un meilleur maintien, en particulier dans le cas d'un volet inverseur 104 de grandes dimensions.

La mise en place de telles rainures 352 et de tels éléments guidés 354 contraint le volet inverseur 104 en position fermée pendant le déplacement en translation du capot mobile 207 servant à dégager le volet inverseur 104 avant sa rotation.

Pour aider à la pénétration de l'élément guidé 354 dans la rainure 354 par sa première extrémité, celle-ci est évasée.

Dans le cas de la Fig. 5, le système de verrouillage 550 présente une rainure 354 dont la première extrémité se prolonge par une partie arquée 558 de manière, selon le sens de déplacement du capot mobile 207, d'une part, à aider au démarrage de la rotation du volet inverseur 104 de sa position fermée vers sa position ouverte, et, d'autre part, à accompagner la fin de la rotation du volet inverseur 104 de sa position ouverte vers sa position fermée.

La Fig. 5 montre également que la deuxième extrémité de la rainure 354 présente une courbure 556 qui oriente la deuxième extrémité vers l'extérieur de la nacelle 102 afin de contraindre encore plus le volet inverseur 104 dans sa position fermée, lorsque le capot mobile 207 est en position de fermeture.

L'invention a été plus particulièrement décrite dans le cas d'une nacelle sous une aile mais elle peut s'appliquer à une nacelle située à l'arrière du fuselage.

## Revendications

1. Nacelle (102) pour un turboréacteur double flux (100), ladite nacelle (102 comportant :
- un capot fixe (206) et un capot mobile (207) mobile en translation selon une direction de translation entre une position de fermeture dans laquelle il est rapproché du capot fixe (206) et une position d'ouverture dans laquelle il est éloigné du capot fixe (206) vers l'arrière,
- un actionneur (362, 702) prévu pour déplacer le capot mobile (207) de la position de fermeture à la position d'ouverture et inversement,
- une fenêtre (210) délimitée en amont par le capot fixe (206) et en aval par le capot mobile (207), ladite fenêtre (210) étant ouverte entre une veine (202) d'un flux secondaire (208) et l'extérieur de la nacelle (102),
- un volet inverseur (104) monté mobile en rotation autour d'un axe de rotation entre une position fermée dans laquelle il obture la fenêtre (210) et une position ouverte dans laquelle il n'obture pas la fenêtre (210), et
- un mécanisme d'entraînement prévu pour coordonner et différer le passage de la position fermée à la position ouverte du volet inverseur (104) avec le passage de la position de fermeture à la position d'ouverture du capot mobile (207) et inversement, ledit mécanisme d'entraînement étant prévu pour réaliser une première combinaison assurant, à partir de la position fermée et de la position de fermeture :
- une translation vers l'arrière (52) du capot mobile (207) selon la direction de translation pour déplacer le capot mobile (207) de la position de fermeture à la position d'ouverture, puis à partir d'un certain moment,
- une rotation (54) du volet inverseur (104) autour de l'axe de rotation pour déplacer le volet inverseur (104) de la position fermée à la position ouverte, et
le mécanisme d'entraînement est également prévu pour réaliser une deuxième combinaison assurant, à partir de la position ouverte et de la position d'ouverture :
- une translation vers l'avant (56) du capot mobile (207) selon la direction de translation pour déplacer le capot mobile (207) de la position d'ouverture à la position de fermeture, et
- une rotation (58) en sens inverse du volet inverseur (104) autour de l'axe de rotation pour déplacer le volet inverseur (104) de la position ouverte à la position fermée,
la nacelle (102) comprenant en outre un système de verrouillage (350, 550) comportant :
- une rainure (352) délimitée sur ses flancs par deux murs (360a-b) globalement parallèles à la direction de translation et fixés au capot mobile (207), ladite rainure (352) s'étendant entre une première extrémité orientée vers l'avant et ouverte et une deuxième extrémité,
- un élément guidé (354) qui est guidé dans la glissière (352) et fixé au volet inverseur (104), l'élément guidé (354) se déplaçant de la deuxième extrémité vers la première extrémité avec le déplacement du capot mobile (207) de sa position de fermeture vers sa position d'ouverture et sortant de la rainure (352) par la première extrémité lorsque le volet inverseur (104) entame sa rotation pour passer de la position fermée à la position ouverte, et l'élément guidé (354) se déplaçant hors de la rainure (352) tant que le volet inverseur (104) pivote de sa position ouverte à sa position fermée et que le capot mobile (207) se déplace de sa position d'ouverture vers sa position de fermeture, et entrant dans la rainure (352) par sa première extrémité à la fin de la rotation du volet inverseur (104) puis se déplaçant de la première extrémité jusqu'à la deuxième extrémité avec la poursuite du déplacement du capot mobile (207) jusqu'à sa position de fermeture.

2. Nacelle (102) selon la revendication 1, **caractérisée en ce que** la première extrémité est évasée.

3. Nacelle (102) selon la revendication 1, **caractérisée en ce que** la première extrémité se prolonge par une partie arquée (558) de manière, selon le sens de déplacement du capot mobile (207), d'une part, à aider au démarrage de la rotation du volet inverseur (104) de sa position fermée vers sa position ouverte, et, d'autre part, à accompagner la fin de la rotation du volet inverseur (104) de sa position ouverte vers sa position fermée.

4. Nacelle (102) selon la revendication 1, **caractérisée en ce que** la deuxième extrémité de la rainure (354) présente une courbure (556) qui oriente la deuxième extrémité vers l'extérieur de la nacelle (102).

5. Turboréacteur double flux (100) comportant un moteur (20) et une nacelle (102) selon l'une des revendications 1 à 4 entourant le moteur (20), et où une veine (202) d'un flux secondaire (208) est délimitée entre la nacelle (102) et le moteur (20).

6. Aéronef (10) comportant au moins un turboréacteur double flux (100) selon la revendication 5.

## Patentansprüche

1. Gondel (102) für ein Zweistrom-Turbostrahltriebwerk (100), wobei die Gondel (102) aufweist:
- eine ortsfeste Haube (206) und eine bewegliche Haube (207), die gemäß einer Translationsrichtung zwischen einer Schließstellung, in der sie der ortsfesten Haube (206) angenähert ist, und einer Öffnungsstellung translationsbeweglich ist, in der sie nach hinten von der ortsfesten Haube (206) entfernt ist,
- einen Stellantrieb (362, 702), der vorgesehen ist, um die bewegliche Haube (207) von der Schließstellung in die Öffnungsstellung und umgekehrt zu verschieben,
- ein Fenster (210), das stromaufwärts von der ortsfesten Haube (206) und stromabwärts von der beweglichen Haube (207) begrenzt wird, wobei das Fenster (210) zwischen einer Strömung (202) eines Sekundärstroms (208) und der Außenseite der Gondel (102) offen ist,
- eine Schubumkehrklappe (104), die zwischen einer geschlossenen Stellung, in der sie das Fenster (210) verschließt, und einer offenen Stellung, in der sie das Fenster (210) nicht verschließt, um eine Drehachse drehbeweglich montiert ist, und
- einen Antriebsmechanismus, der vorgesehen ist, um den Übergang der Schubumkehrklappe (104) von der geschlossenen Stellung in die offene Stellung mit dem Übergang der beweglichen Haube (207) von der Schließstellung in die Öffnungsstellung und umgekehrt zu koordinieren und zu verzögern, wobei der Antriebsmechanismus vorgesehen ist, um eine erste Kombination herzustellen, die ausgehend von der geschlossenen Stellung und von der Schließstellung gewährleistet:
- eine Translationsbewegung der beweglichen Haube (207) gemäß der Translationsrichtung nach hinten (52), um die bewegliche Haube (207) von der Schließstellung in die Öffnungsstellung zu verschieben, dann ab einem bestimmten Zeitpunkt,
- eine Drehung (54) der Schubumkehrklappe (104) um die Drehachse, um die Schubumkehrklappe (104) von der geschlossenen Stellung in die offene Stellung zu verschieben, und
der Antriebsmechanismus ebenfalls vorgesehen ist, um eine zweite Kombination herzustellen, die ausgehend von der offenen Stellung und der Öffnungsstellung gewährleistet:
- eine Translationsbewegung der beweglichen Haube (207) nach vorne (56) gemäß der Translationsrichtung, um die bewegliche Haube (207) von der Öffnungsstellung in die Schließstellung zu verschieben, und
- eine Drehung (58) der Schubumkehrklappe (104) in Gegenrichtung um die Drehachse, um die Schubumkehrklappe (104) von der offenen Stellung in die geschlossene Stellung zu verschieben,
wobei die Gondel (102) außerdem ein Verriegelungssystem (350, 550) enthält, das aufweist:
- eine Rille (352), die an ihren Flanken von zwei Wänden (360a-b) global parallel zur Translationsrichtung und an der beweglichen Haube (207) befestigt begrenzt wird, wobei die Rille (352) sich zwischen einem ersten nach vorne ausgerichteten und offenen Ende und einem zweiten Ende erstreckt,
- ein geführtes Element (354), das in der Gleitschiene (352) geführt wird und an der Schubumkehrklappe (104) befestigt ist, wobei das geführte Element (354) sich mit der Verschiebung der beweglichen Haube (207) von ihrer Schließstellung in ihre Öffnungsstellung vom zweiten Ende zum ersten Ende verschiebt und über das erste Ende aus der Rille (352) austritt, wenn die Schubumkehrklappe (104) ihre Drehung beginnt, um von der geschlossenen Stellung in die offene Stellung überzugehen, und das geführte Element (354) sich außerhalb der Rille (352) verschiebt, so lange die Schubumkehrklappe (104) von ihrer offenen Stellung in ihre geschlossene Stellung schwenkt und die bewegliche Haube (207) sich von ihrer Öffnungsstellung in ihre Schließstellung verschiebt, und am Ende der Drehung der Schubumkehrklappe (104) in die Rille (352) über ihr erstes Ende eintritt und sich dann mit der Fortsetzung der Verschiebung der beweglichen Haube (207) bis in ihre Schließstellung vom ersten Ende bis zum zweiten Ende verschiebt.

2. Gondel (102) nach Anspruch 1, **dadurch gekennzeichnet, dass** das erste Ende verbreitert ist.

3. Gondel (102) nach Anspruch 1, **dadurch gekennzeichnet, dass** das erste Ende sich durch einen gebogenen Bereich (558) verlängert, um gemäß der Verschieberichtung der beweglichen Haube (207) einerseits zum Start der Drehung der Schubumkehrklappe (104) von ihrer geschlossenen Stellung in ihre offene Stellung beizutragen, und andererseits das Ende der Drehung der Schubumkehrklappe (104) von ihrer offenen Stellung in ihre geschlossene Stellung zu begleiten.

4. Gondel (102) nach Anspruch 1, **dadurch gekennzeichnet, dass** das zweite Ende der Rille (354) eine Krümmung (556) aufweist, die das zweite Ende zur Außenseite der Gondel (102) ausrichtet.

5. Zweistrom-Turbostrahltriebwerk (100), das einen Motor (20) und eine Gondel (102) nach einem der Ansprüche 1 bis 4 aufweist, die den Motor (20) umgibt, und wobei eine Strömung (202) eines Sekundärstroms (208) zwischen der Gondel (102) und dem Motor (20) begrenzt wird.

6. Luftfahrzeug (10), das mindestens ein Zweistrom-Turbostrahltriebwerk (100) nach Anspruch 5 aufweist.

## Claims

1. Nacelle (102) for a turbofan (100), said nacelle (102) comprising:
- a fixed cowl (206) and a mobile cowl (207) mobile in translation in a translation direction between a closing position in which it is close to the fixed cowl (206) and an opening position in which it is far aft of the fixed cowl (206),
- an actuator (362, 702) intended for moving the mobile cowl (207) from the closing position to the opening position, and vice versa,
- a window (210) delimited on the upstream side by the fixed cowl (206) and on the downstream side by the mobile cowl (207), said window (210) being open between a duct (202) for a bypass flow (208) and the exterior of the nacelle (102),
- a reverser flap (104) mounted mobile in rotation about a rotation axis between a closed position in which it obstructs the window (210) and an open position in which it does not obstruct the window (210), and
- a drive mechanism adapted to coordinate and defer the passage from the closed position to the open position of the reverser flap (104) with the passage from the closing position to the opening position of the mobile cowl (207) and vice versa, said drive mechanism being adapted to realize a first combination bringing about, from the closed position and from the closing position:
- an aft translation (52) of the mobile cowl (207) in the translation direction to move the mobile cowl (207) from the closing position to the opening position, then, from a certain moment,
- a rotation (54) of the reverser flap (104) about the rotation axis to move the reverser flap (104) from the closed position to the open position, and
the drive mechanism is also adapted to realize a second combination bringing about, from the open position and from the opening position:
- a forward translation (56) of the mobile cowl (207) in the translation direction to move the mobile cowl (207) from the opening position to the closing position, and
- a rotation (58) in the reverse direction of the reverser flap (104) about the rotation axis to move the reverser flap (104) from the open position to the closed position,
the nacelle (102) further comprising a locking system (350, 550) comprising:
- a groove (352) bounded laterally by two walls (360a-b) that are essentially parallel to the translation direction and are fixed to the mobile cowl (207), said groove (352) extending between a first end that is oriented forward and open and a second end,
- a guided element (354) which is guided in the slide (352) and is fixed to the reverser flap (104), the guided element (354) moving from the second end towards the first end with the movement of the mobile cowl (207) from its closing position towards its opening position and leaving the groove (352) by the first end when the reverser flap (104) begins its rotation to pass from the closed position to the open position, and the guided element (354) moving outside the groove (352) while the reverser flap (104) pivots from its open position to its closed position and while the mobile cowl (207) moves from its opening position towards its closing position, and entering the groove (352) by its first end at the end of the rotation of the reverser flap (104) then moving from the first end to the second end with the continued movement of the mobile cowl (207) up to its closing position.

2. Nacelle (102) according to Claim 1, **characterized in that** the first end is widened.

3. Nacelle (102) according to Claim 1, **characterized in that** the first end is extended by an arcuate portion (558) such that, in the direction of movement of the mobile cowl (207), on one hand it aids in initiation of the rotation of the reverser flap (104) from its closed position towards its open position, and on the other hand it accompanies the end of the rotation of the reverser flap (104) from its open position towards its closed position.

4. Nacelle (102) according to Claim 1, **characterized in that** the second end of the groove (354) has a curvature (556) which orients the second end towards the outside of the nacelle (102).

5. Turbofan (100) comprising an engine (20) and a nacelle (102) according to one of Claims 1 to 4 surrounding the engine (20), and in which a duct (202) for a bypass flow (208) is delimited between the nacelle (102) and the engine (20).

6. Aircraft (10) comprising at least one turbofan (100) according to Claim 5.
